# EUROPEAN PATENT APPLICATION

(11) **EP 4 830 811 A1**
(43) Date of publication of application: **28.10.2026**
(21) Application number: 25172370.6
(22) Date of filing: 24.04.2025
(51) Int. Cl.: B01D 46/04, B01D 46/88, B01D 46/90

(54) **A FILTRATION SYSTEM WITH A SEALING SYSTEM**

(71) Applicant: DONALDSON COMPANY, INC., Bloomington, MN 55431 (US)
(72) Inventor: BEDFORD,, Nigel Joseph, Ferndown, BH22 0JN (GB); BUCZAK,, David, Poole, BH12 4BQ (GB)
(74) Representative: Potter Clarkson

(57) **Abstract**

A filtration system comprising a hub, a filter cartridge support and a sealing system. The sealing system comprises: an outer double seal that provides a seal between the hub and the filter cartridge support. The outer double seal includes first and second outer sealing members that define a sealing cavity therebetween, and wherein the outer double seal further comprises an outer double seal gas inlet for communicating sealing gas to the sealing cavity between the first and second outer sealing members. The sealing system also comprises an inner double seal that provides a seal between the hub and the filter cartridge support. The inner double seal includes first and second inner sealing members that define a sealing cavity therebetween, and wherein the inner double seal further comprises an inner double seal gas inlet for communicating sealing gas to the sealing cavity between the first and second inner sealing members. Gas flow channels in the filter cartridge support are located between the inner and the outer double seals.

## Description

### Field

The present disclosure relates to a filtration system and in particular, although not exclusively, to a filtration system with a sealing system.

### Summary

According to a first aspect of the present disclosure, there is provided a filtration system comprising:
a gas inlet port for receiving dirty gas;
a filter cartridge active inlet port, wherein the filter cartridge active inlet port is for communicating a gas to a filter cartridge;

a filter cartridge support for accommodating a plurality of filter cartridges at respective filter cartridge locations, wherein the filter cartridge support comprises a gas flow channel at each of the filter cartridge locations, wherein each gas flow channel provides a fluid path through the thickness of the filter cartridge support;
an actuator configured to rotate the filter cartridge support relative to the hub such that a filter cartridge located in each filter cartridge location cycles between:
   a filtering position, at which the filter cartridge is fluidly connected to at least one of the at least one filter cartridge active inlet ports of the hub;
   a cartridge replacement position, at which a used filter cartridge can be removed from the filter cartridge support and a new filter cartridge can be attached to the filter cartridge support;
a sealing system comprising:
   an outer double seal that includes a first outer sealing member and a second outer sealing member, wherein the first and second outer sealing members each provide a seal between the hub and the filter cartridge support, and wherein the first and second outer sealing members are arranged concentrically with respect to each other such that they define a sealing cavity therebetween, and wherein the outer double seal further comprises an outer double seal gas inlet for communicating sealing gas to the sealing cavity between the first and second outer sealing members;
   an inner double seal that includes a first inner sealing member and a second inner sealing member, wherein the first and second inner sealing members each provide a seal between the hub and the filter cartridge support, and wherein the first and second inner sealing members are arranged concentrically with respect to each other such that they define a sealing cavity therebetween, and wherein the inner double seal further comprises an inner double seal gas inlet for communicating sealing gas to the sealing cavity between the first and second inner sealing members, and wherein each gas flow channel in the filter cartridge support is located between the inner and the outer double seals.

The filtration system may further comprise a clamping mechanism configured to apply a clamping force to urge the filter cartridge support and the hub towards each other; wherein the clamping mechanism is configured to:
apply a first clamping force when the filter cartridge support is rotating relative to the hub; and
apply a second clamping force when the filter cartridge support is not rotating relative to the hub, wherein the second clamping force is greater than the first clamping force.

The clamping mechanism may further comprise a plurality of clamps.

Each of the plurality of clamps may comprise pneumatic cylinders. The filtration system may further comprise a ball bearing interface positioned between the pneumatic cylinders and the filter cartridge support.

The pressure applied when the filter cartridge support is rotating may be between 500 newtons and 1000 newtons.

The pressure applied when the filter cartridge support is not rotating may be up to 500 newtons.

The filter cartridge support may be rotatable between a plurality of discrete positions and the filter cartridge support may be static in each of the plurality of discrete positions for a set period of time.

The filter cartridge support may comprise five discrete positions, wherein the discrete positions comprise the filtering position and the cartridge replacement position.

In use, the sealing gas pressure in the sealing cavity between the first and second inner sealing members and/or the sealing cavity between the first and second outer sealing members may be higher than the pressure in a central cavity.

### Brief Description of the Drawings

One or more embodiments will now be described by way of example only with reference to the accompanying drawings in which:
Figure 1 is a schematic view of a filtration system that is connected to an additive manufacturing (AM) apparatus;
Figures 2a and 2b illustrate schematically two examples of additive manufacturing processes that can be performed in the chamber of Figure 1;
Figure 3 shows an example embodiment of a filtration system according to the present disclosure;
Figure 4 shows a schematic view of a filter cartridge when it is disengaged from the filtration system;
Figure 5 shows a view of the filter cartridge support of Figure 3 from underneath when no filter cartridges are connected to it;
Figure 6a shows a perspective view of the hub of Figure 3;
Figure 6b shows a view of the hub of Figure 3 from underneath;
Figure 7 shows another example of how a filter cartridge can be passivated when it is in the passivation position;
Figure 8 shows a process flow that illustrates a method of operating a filtration system;
Figure 9 shows a process flow that illustrates another method of operating a filtration system;
Figure 10 schematically illustrates another example of a filter cartridge that can be used with the filtration systems that are described herein;
Figure 11 shows another example embodiment of a filtration system;
Figure 12 is a schematic view of another filtration system according to an embodiment of the present disclosure;
Figure 13a shows a perspective view of the hub of Figure 12;
Figure 13b shows a view of the hub of Figure 13a from underneath;
Figure 13c shows a view of a filter cartridge support, that is used with the hub of Figures 13a and 13b, from underneath;
Figure 14a shows another embodiment of a filtration system according to the present disclosure;
Figure 14b shows the embodiment of Figure 14a so that a sealing system is visible;
Figure 15a shows a schematic side view of a clamping mechanism holding together the hub and the filter cartridge support; and
Figure 15b shows a schematic top view of the clamping mechanism of Figure 15a and the hub.

### Detailed Description

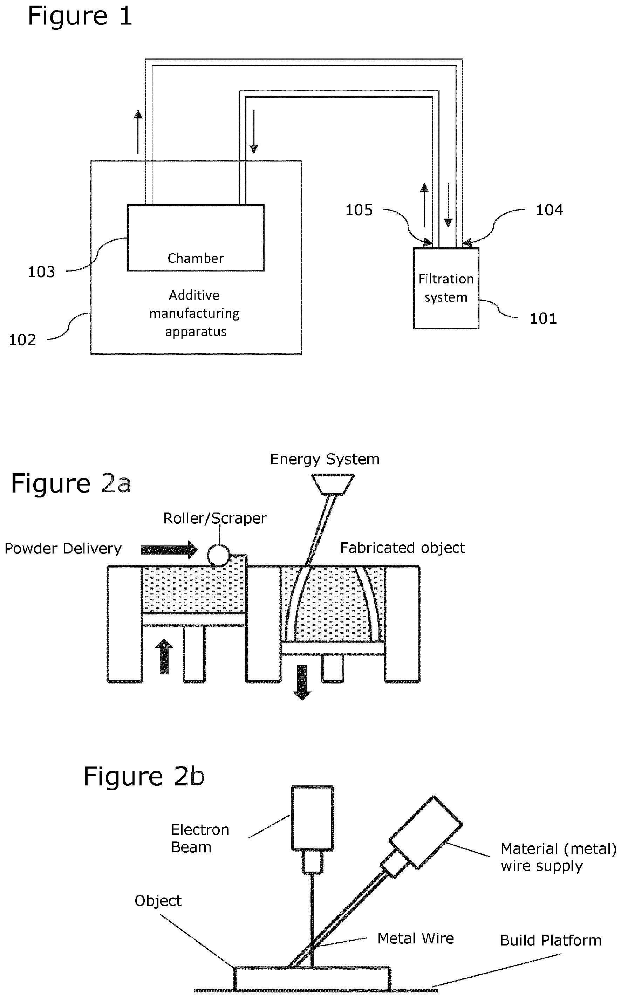

Figure 1 is a schematic view of a filtration system 101 that is connected to an additive manufacturing (AM) apparatus 102. The AM apparatus 102 includes a print chamber 103. The filtration system 101 includes a gas inlet port 104 for receiving dirty gas from the print chamber 103 of the AM apparatus 102. The filtration system 101 also includes a gas outlet port 105 for providing clean gas back to the print chamber 103 of the AM apparatus 102. In this example, as will be discussed in more detail below, the filtration system 101 includes replaceable filter cartridges (not shown).

As is known in the art, additive manufacturing involves the production of objects by adding material. Various sub-technologies such as Lazer Powder Bed Fusion, Binder Jetting and Directed Energy Deposition exist. Examples disclosed herein are particularly relevant to techniques that produce smoke and how that smoke can be safely filtered.

Figures 2a and 2b illustrate schematically two examples of additive manufacturing processes that can be performed in the chamber of Figure 1. Figure 2a shows an example of powder bed fusion, in which thermal energy selectively fuses regions of a powder bed. Figure 2b shows an example of Directed Energy Deposition (DED), which includes a machine that has a nozzle mounted on a multi axis arm in order to deposit melted material onto a specified surface, where it solidifies.

Returning to Figure 1, continuous filtration can be required for additive manufacturing processes to ensure that a clean, inert environment is maintained in the chamber 103, with no breaks during the print process. Such breaks could result in flaws in the end product and / or could lead to an uncontrolled reaction of metal powder that is produced in the chamber 103 as part of the additive manufacturing process. In this example, argon (or another inert gas) is introduced into the chamber 103 during an AM process, such as a metal 3D printing process. Dirty argon is provided to the filtration system 101 from the chamber 103 such that it can be cleaned before being returned to the chamber 103. A risk of an undesirable thermal event exists when particles of material that that are present in the chamber 103 (including, but not limited, to titanium and aluminium) come into contact with air, which can result in rapid oxidation of the material leading to a potential exothermic event. Therefore, once a filter cartridge is ready to be replaced it should be passivated and thereby reacted in a controlled manner. This can be achieved by introducing an appropriate passivation material into the filter cartridge, in a controlled manner, in order to passivate and / or encapsulate the media held in the filter. Thereby, enabling the safe handling and disposal of the used filter cartridge. This will be discussed in more detail below.

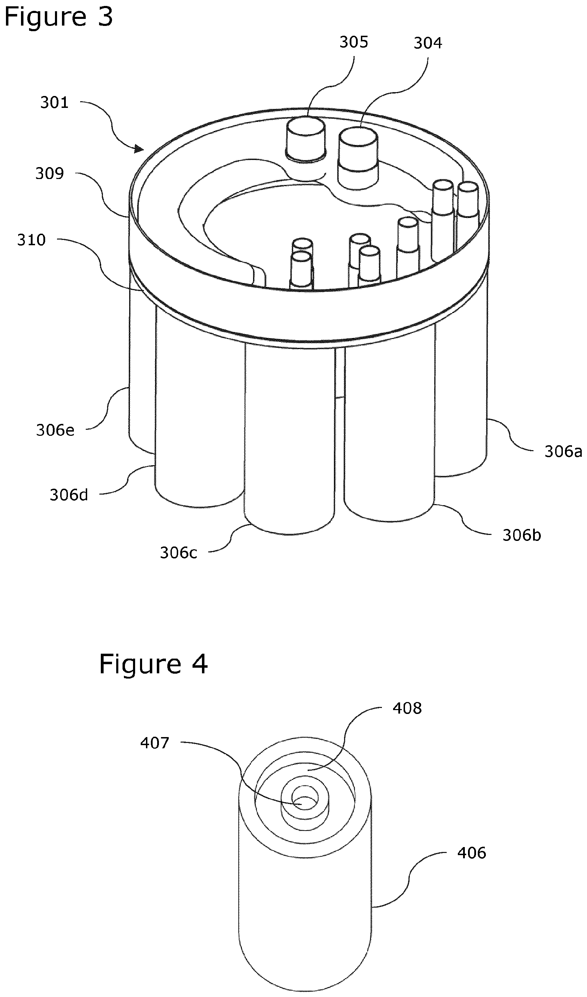

Figure 3 shows an example embodiment of a filtration system 301 according to the present disclosure. The filtration system 301 includes a plurality of replaceable filter cartridges 306a-306e, five of which are visible in Figure 3.

Figure 4 shows a schematic view of a filter cartridge 406 when it is disengaged from the filtration system. In this example, the filter cartridge 406 includes an output port 407 in the centre of an end face of the filter cartridge 406. The filter cartridge 406 also includes an annular inlet port 408 around the outlet port 407. Filter cartridges having this structure are well-known in the art, although it will be appreciated that the filtration systems disclosed herein are not limited to any specific types or structures of filter cartridges.

Returning to Figure 3, the filtration system 301 includes a hub 309 and a filter cartridge support 310.

The hub 309 includes: a gas inlet port 304 for receiving dirty gas from a manufacturing process, such as from a print chamber of an additive manufacturing apparatus; and a gas outlet port 305 for providing clean gas back to the manufacturing process. The hub 309 also includes various other ports that are for communicating gas to or from a filter cartridge 306a-e. Not all of these various other ports are very visible in Figure 3, but they will be described in more detail below.

The filter cartridge support 310 in this example is implemented as a plate that sits between the hub 309 and the filter cartridges 306a-e. In this example it is for accommodating eight filter cartridges 306a-e at respective filter cartridge locations. However, more generally in other examples, the filter cartridge support 310 can accommodate a different number of filter cartridges but preferably at least three filter cartridges at any one time. Each of the filter cartridge locations represents a fixed location in relation to the filter cartridge support 310, such that when a filter cartridge is located at a filter cartridge location it is held in that fixed location with respect to the filter cartridge support 310 until it is removed from the filtration system 301. The filter cartridge support 310 can include any suitable attachment mechanism for holding a filter cartridge at a filter cartridge location such as, but not limited to: a snap-fit mechanism, any form of displaceable mechanical detent, a screw thread, a cam or locating rail, a cam ring to push and hold the filter cartridge in position, a vacuum source to suck the filter cartridge into place, etc..

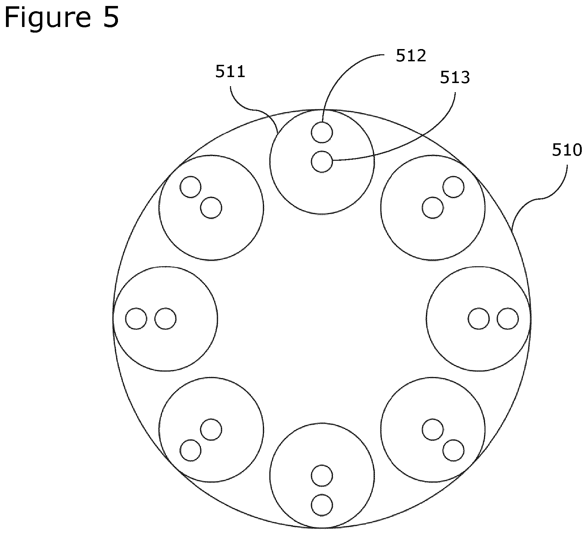

The filter cartridge support 310 in this example also has a number of gas flow channels through its thickness such that it can facilitate gas flow between the hub 309 and the filter cartridges 306a-e. These will be described in more detail with reference to Figure 5.

The filter cartridge support 310 is rotatable relative to the hub 309 such that the gas flow channels of the filter cartridge support 310 are aligned with different regions of the hub 309. Due to this relative rotation, the hub 309 can also be referred to as a carousel. In at least some of the relative orientations of the filter cartridge support 310 and the hub 309, gas flow channels through the filter cartridge support 310 are aligned with channels or ports in the hub 309. In some examples, the filter cartridge support 310 can be sealed with the hub 309 using a low friction tape / gasket material that extends across the interface between the two components thereby enabling ease of rotation between the static and dynamic rotating surfaces.

Figure 5 shows a view of the filter cartridge support 510 of Figure 3 from underneath when no filter cartridges are connected to it. The outline of eight filter cartridge locations 511 are shown in dashed lines. Each of these filter cartridge locations 511 is a portion of a lower surface of the filter cartridge support 510 to which an end surface of a filter cartridge can be attached when the filter cartridge is received at the filter cartridge location 511. The filter cartridge locations 511 are equiangularly circumferentially spaced around the filter cartridge support 510. In this example, they are spaced around the perimeter of the filter cartridge support 510.

Associated with each filter cartridge location 511 is a filter gas flow inlet channel 513 and a filter gas flow outlet channel 512, which of each pass through the thickness of the filter cartridge support 510. When a filter cartridge is positioned at a filter cartridge location 511, its inlet port is aligned with the filter gas flow inlet channel 513 and its outlet port is aligned with the filter gas flow outlet channel 512. In this way, a gas can be communicated to or from a filter cartridge when it is located at a filter cartridge location 511.

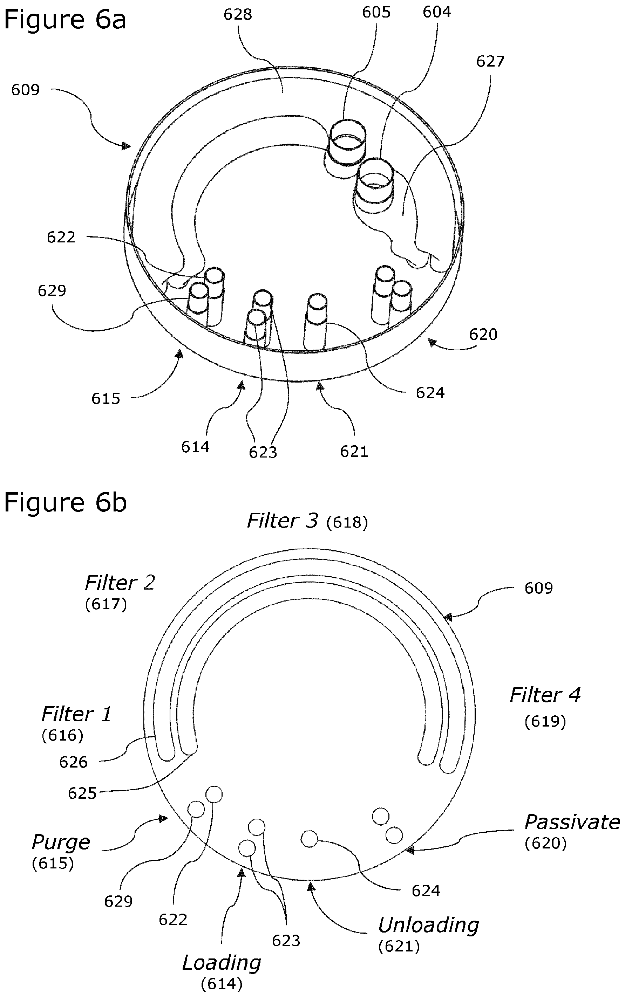

Figure 6a shows a perspective view of the hub 609 of Figure 3, and Figure 6b shows a view of the same hub 609 from underneath.

Figure 6a shows the gas inlet port 604 (that receives dirty gas) and the gas outlet port 605 (for providing clean gas).

In Figure 6b, eight different positions on the underside of the hub 609 are labelled. When a filter cartridge is positioned at each of these positions (via the filter cartridge support in this example) it can engage with the hub 609 in one of a number of different ways. As indicated above, the filter cartridge support is rotatable relative to the hub 609 such that a filter cartridge that is attached to the filter cartridge support can cycle between the different positions of the hub 609 that are shown in Figure 6b. In this example, an actuator is used to provide a force to the filter cartridge support to cause it to rotate such that a filter cartridge location on the filter cartridge support (as shown in Figure 5 with reference 511) moves between the different positions of the hub 609.

The positions that are shown in Figure 6b, some of which are also visible in Figures 6a, are:
- a cartridge-loading position 614, at which a new filter cartridge is receivable at the filter cartridge support. As will be discussed below, a previously used filter cartridge will have been removed from a filter cartridge location of the filter cartridge support before that filter cartridge location is moved on so that it aligns with the cartridge-loading position 614. Therefore, when the filter cartridge location first arrives at the cartridge-loading position 614 it is empty. That is, it does not have a filter cartridge attached to it. A new filter cartridge can then be received at the filter cartridge support when the associated filter cartridge location of the is at the cartridge-loading position 614 of the hub 609.

In this example, two gas flow channels 623 through the hub 609 are shown at the cartridge-loading position 614. These gas flow channels 623 can be used to provide a pressure differential between the filter cartridge and the hub 609 / filter cartridge support such that a suction force is provided to the filter cartridge and it is urged into contact with the underside of the filter cartridge support. This is one example of a cartridge locating mechanism for applying a bias force to a filter cartridge in order to bias the filter cartridge towards the filter cartridge support / hub 609. Another example of a cartridge locating mechanism is a mechanical mechanism, such as a cam mechanism, that applies an upward force to a lower surface of the filter cartridge. Such mechanisms may involve use of more or less than two gas flow channels 623 or no gas flow channels at all. Irrespective of what type of cartridge locating mechanism is used, it may apply the bias force when a filter cartridge is in the cartridge-loading position 614 and optionally also when the filter cartridge is any of the other positions that are described below (apart from the cartridge-unloading position 621).

In some examples, a separate cartridge-loading position 614 may not be required because it can be possible to load a filter cartridge into the filtration system at a different position, such as the cartridge purge position 615 that is described below.
- a cartridge purge position 615, at which the filter cartridge is filled with an inert gas (such as argon), thereby purging air out of the filter cartridge. In this way, the filter cartridge can be pre-processed before it is used to filter dirty gas received from the manufacturing apparatus. When a filter cartridge is in the cartridge purge position 615, an inlet port of the filter cartridge is in fluid connection with an inert gas channel 622 in the hub 609. Also, an outlet port of the filter cartridge can be in fluid connection with a purge channel 629 in the hub 609. The purge channel 629 is for communicating gas purged out of the filter cartridge as the inert gas is provided into the filter cartridge. In some examples, the purge channel 629 can simply be an opening into the environment because it is safe to vent any purged gas to atmosphere.

In some examples, a controllable valve may be associated with the inert gas channel 622 such the flow of the inert gas is controllable. This can avoid wasting the inert gas because it does not need to continuously flow into the filter cartridge while it is in the cartridge purge position 615 and waiting to go online. For example, a controller may control the controllable valve such that it allows the inert gas to flow for a predetermined period of time before the filter cartridge moves on to the first filtering position 616, which is discussed below.
- first to fourth filtering positions 616-619, at which the filter cartridge is actively filtering the dirty gas that is received by the filtration system. At these positions, filter cartridges may be referred to as being online. The fourth filtering position 619 is the last filtering position in this example, and the second and third filtering positions are intermediate filtering positions.

At least one filter cartridge active inlet port 625 and at least one filter cartridge active outlet port 626 in the hub 609 are associated with each of the first to fourth filtering positions 616-619. The filter cartridge active inlet port 625 is for communicating gas between the gas inlet port 604 of the hub 609 and the inlet ports of the filter cartridges that are in the first to fourth filtering positions 616-619. The filter cartridge active outlet port 626 is for communicating gas between the outlet ports of the filter cartridges that are in the first to fourth filtering positions 616-619 and the gas outlet port 605 of the hub 609. In this example, the filter cartridge active inlet port 625 is a single extended port that extends continuously such that it encompasses each of the first and the fourth filtering positions 616-619. Therefore, once a filter cartridge enters the first filtering position 616 it remains in constant fluid communication with the gas inlet port 604 and the gas outlet port 605 of the hub 609 until it leaves the last filtering position. That is, a filter cartridge active inlet port 625 and a filter cartridge active outlet port 626 in the hub 609 is associated with each filtering position such that a filter cartridge that is located at a filtering position 616-619 is fluidly connected to a pair of the filter cartridge active inlet and active outlet ports 625, 626 of the hub 609. In this way, dirty gas can enter into the filter cartridge through the filter cartridge active inlet port 625, and cleaned gas can exit the filter cartridge through the filter cartridge active outlet port 626.

In an alternative implementation, a discrete pair of filter cartridge active inlet ports and filter cartridge active outlet ports can be associated with each of the first to fourth filtering positions 616-619. In which case, each pair of filter cartridge active inlet ports and active outlet ports are circumferentially spaced apart from each other around the hub 609. In the example of Figures 6a and 6b, the fourth pair of filter cartridge active inlet ports and filter cartridge active outlet ports would be the last pair, and the second and third pairs of filter cartridge active inlet ports and filter cartridge active outlet ports would be intermediate pairs.

As can be seen from Figure 6a, the hub 609 in this example includes an inlet manifold 627 and an outlet manifold 628. The gas inlet port 604 and each of the filter cartridge active inlet ports 625 open into the inlet manifold 627. In this way, a single pipe can be used to communicate dirty gas from the print chamber of the manufacturing apparatus to the filtration system, yet a plurality of filter cartridges can be used at the same time to clean the dirty gas. Similarly, the gas outlet port 605 and each of the filter cartridge active outlet ports 626 open into the outlet manifold 628 such that a single pipe can be used to communicate the cleaned gas back to the print chamber. Therefore, when a filter cartridge is in one of the first to fourth filtering positions 616-619, it is in fluid communication with the gas inlet port 604 and the gas outlet port 605.
- a passivation position 620, at which the filter cartridge can be passivated. As discussed above, the process of passivation involves making the filter cartridge safe for being removed from the filter cartridge support. As will be discussed below, passivation can be performed in a number of different ways, some of which may not require gas flow channels through the hub 609.
- a cartridge-unloading position 621, at which the filter cartridge is removable from the filter cartridge support. Since the cartridge-unloading position 621 is after the passivation position 620, the filter cartridge can be safely removed with a reduced risk of adverse effects such as a thermal event.

In this example, one gas flow channel 624 through the hub 609 is shown at the cartridge-unloading position 621. This gas flow channel 624 can be used to provide a pressure differential between the filter cartridge and the hub 609 / filter cartridge support such that a force is provided to the filter cartridge to blow it away from the underside of the filter cartridge support. This is one example of a cartridge removal mechanism for either: applying a bias force to a filter cartridge when it is in the cartridge-unloading position 621 in order to bias the filter cartridge away from the filter cartridge support / hub 609; or for removing a biasing force that is applied by a cartridge locating mechanism. Other mechanisms may involve use of more than one gas flow channel 624 or no gas flow channels at all.

In some examples, a separate cartridge-unloading position 621 may not be required because it can be possible to unload a filter cartridge from the filtration system at a different position, such as the passivation position 620 that is described above.

These positions are equiangularly circumferentially spaced around the hub 609. In this example they are spaced around the entire perimeter of the hub 609, although in other examples they may be spaced around only a portion of perimeter of the hub 609 such that there are effectively one or more empty slots around the perimeter of the hub. At these empty slots there is no interaction between the hub 609 and any filter cartridge that is attached to the filter cartridge support in a corresponding location.

The filtration system in this example includes an actuator, which moves the filter cartridge support relative to the hub such that a filter cartridge located in each filter cartridge location cycles between the above positions in the order in which they are listed. However, in some examples not all of the positions are required. Therefore, a filter cartridge support and an associated hub 609 can be provided that have some, but not all of, the positions that are identified above.

In one example, the hub 609 may have the following positions (but not necessarily any of the other positions): the first filtering position 616, the second filtering position 617, and the passivation position 620. In such an example, a pre-purged filter cartridge may be provided to the first filtering position such that it is ready to be used straight away. The inclusion of the two (or more) filtering positions can be beneficial because it enables the simultaneous use of a plurality of filter cartridges thereby allowing a reasonably high gas flow rate to be achieved through the filter cartridges without resulting in an undesirable large pressure drop across the individual filter cartridges. Also, the transition of the filter cartridges between the different filtering positions enables continuous filtration to be achieved without having to take any filter cartridges offline for a significant period of time. A yet further advantage is that a used filter cartridge can be passivated while it is attached to the filter cartridge support 310, and therefore before it is removed from the filtration system. In this way, any safety risks that arise from a person needing to handle an un-passivated filter cartridge can be mitigated. The use of multiple filter cartridges can be advantageous because they enable appropriate sizing of the filters to ensure low pressure drop across the filter without having an individual filter that holds excessive reactive condensate, or is too large for practicable disposal. Providing a system that can support multiple online filters at the same time enables the extremely good flexibility in terms of the ability of the filtration system to support a variety of processes.

In another example, the hub 609 may have the following positions (but not necessarily any of the other positions): the cartridge purge position 615, at least one of the filtering positions 616, and the passivation position 620. In such an example, the hub 609 may not include an inlet manifold 627 and an outlet manifold 628. This is because it may not be necessary to connect a single gas inlet / outlet port to a plurality of filter cartridge inlet / outlet ports. Therefore, in such an example, the hub may simply include a gas inlet channel through its thickness for receiving dirty gas from the print chamber and a gas outlet channel through its thickness for providing clean gas back to the print chamber. An advantage of such a system is that a filter cartridge can be loaded into the filtration system without requiring any pre-treatment (such as purging air out of the filter cartridge) and then can be removed from the filtration system in a state in which it is ready to be disposed of. Therefore, there can be minimal human interaction required to keep the filtration system active for an extended period of time.

In some examples, the filtration system can include a cartridge loading mechanism that automatically loads filter cartridges into the filter cartridge support. The filtration system can also include a cartridge unloading mechanism that automatically unloads filter cartridges from the filter cartridge support. In this way, the filtration system can run autonomously for an extended period of time, during which it automatically replaces its filter cartridges.

In one or more of the examples disclosed herein, the filtration system may include a sensor that senses the performance of the filtration system. For instance such a sensor may sense the effectiveness with which the filtration system is able to filter dirty gas that is receives. One example of a suitable sensor is a weight sensor that senses the weight of one or more of the filter cartridges. As the weight of a filter cartridge increases, it can be expected that its ability to clean incoming gas is reduced because the filter cartridge is becoming full with particles that it has already filtered out of the gas stream. As another example, a flow sensor can be used to determine a flow rate of gas through the filtration system. If the flow rate drops, then this can be attributed to one or more of the filter cartridges becoming clogged up such that it will be less able to continue to adequately filter incoming gas. As a yet further example, a pressure sensor can be used to sense the differential pressure (ΔP) across the filter cartridges. Then this can be translated into a value for the amount of filtered particulate in the last filter cartridge. This translation can be performed by a controller, for example mathematically or by using a look-up table. For instance, a differential pressure (ΔP) of 60% across all four filter cartridges can be translated to 100g of particulate in the fourth filter cartridge. This therefore represents a way of determining a degree of blockage of the lead / final filter. All of the above are examples of indicators of filter loading, and therefore the demand to remove and passivate the last filter element and its contents.

Irrespective of what type of sensor is used, the filtration system can include a controller that processes sensed signalling that is received from one or more of the above sensors. The controller can determine an effectiveness of the filtration system based on the sensed signalling, and if it drops below a threshold value then the controller can cause the actuator to advance the position of the filter cartridge support 310 such that each filter cartridge that is located in a filter cartridge location is advanced to the next position. In this way, a new filter cartridge will be brought online and the ability of the filtration system to filter the incoming gas should improve.

Advantageously, such a system can automatically adapt to any changes in the manufacturing process while maintaining an acceptable level of filtration. For example, if an increased number of lasers are used in the build chamber of the AM apparatus then the controller can automatically increase the frequency with which the filter cartridges change position in the filtration system.

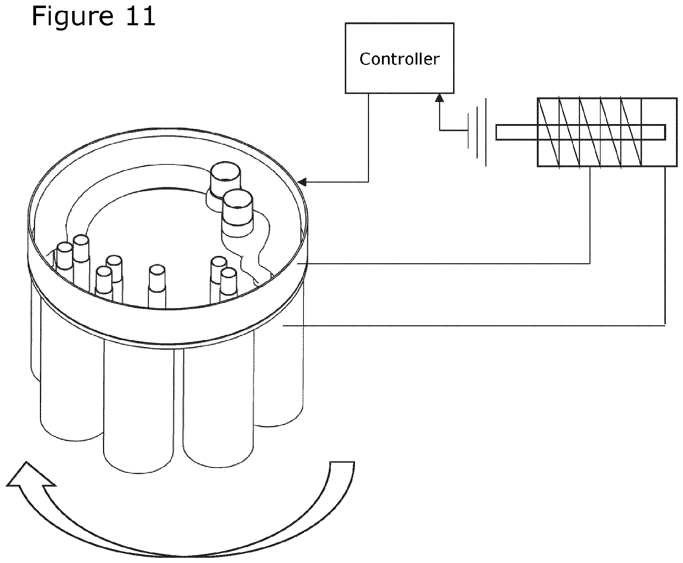

An example of how a filtration system can be automatically controlled will be described below with reference to Figure 11.

In one example, the actuator that moves the filter cartridge support relative to the hub periodically advances the position of a filter cartridge located in each filter cartridge location. The actuator may advance the position of a filter cartridge located in each filter cartridge location in a stepwise fashion, such that it moves the filter cartridge support relative to the hub in discrete steps. In this way, the filter cartridges do not spend a significant time between individually indexed positions that correspond to the positions with reference to the hub that are identified above. Such an actuator can be implemented as a stepper motor or a belt drive that interacts with the outer circumference of the rotating element, thus giving advantageous gearing, for example.

Returning now to the passivation of a filter cartridge that can be performed at the passivation position 620 of Figures 6a and 6b. In the example of Figure 6a, the hub 309 includes at least one passivation inlet channel 630 (in this example two passivation inlet channels 630) for communicating a passivation substance into a filter cartridge that is in the passivation position 620. The passivation substance can be any suitable gas, liquid, or material that renders the filter cartridge non-reactive. For instance, the passivation substance can be a cement, water, a resin, air, oxygen or any oxidising agent, etc.. When a filter cartridge is at the passivation position 620, an inlet port and / or an outlet port of the filter cartridge is in fluid connection with the passivation inlet channel 630 of the hub 609.

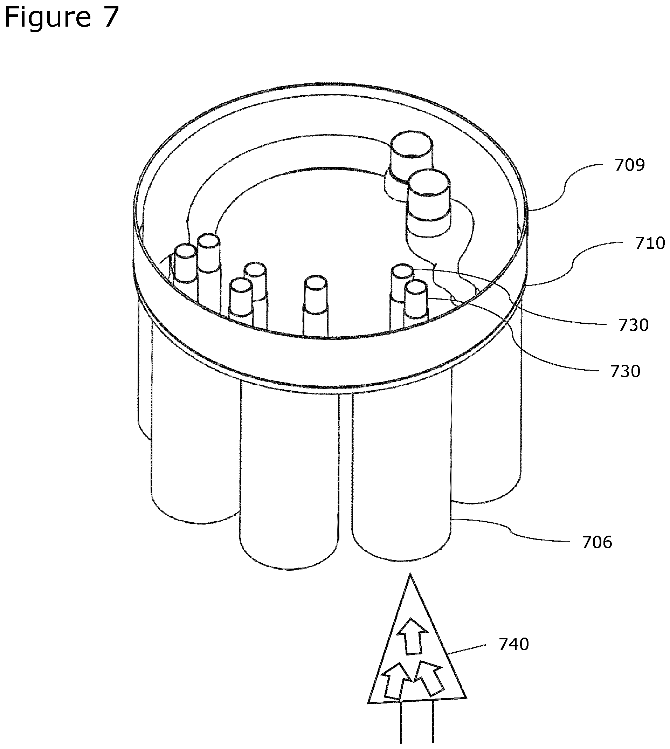

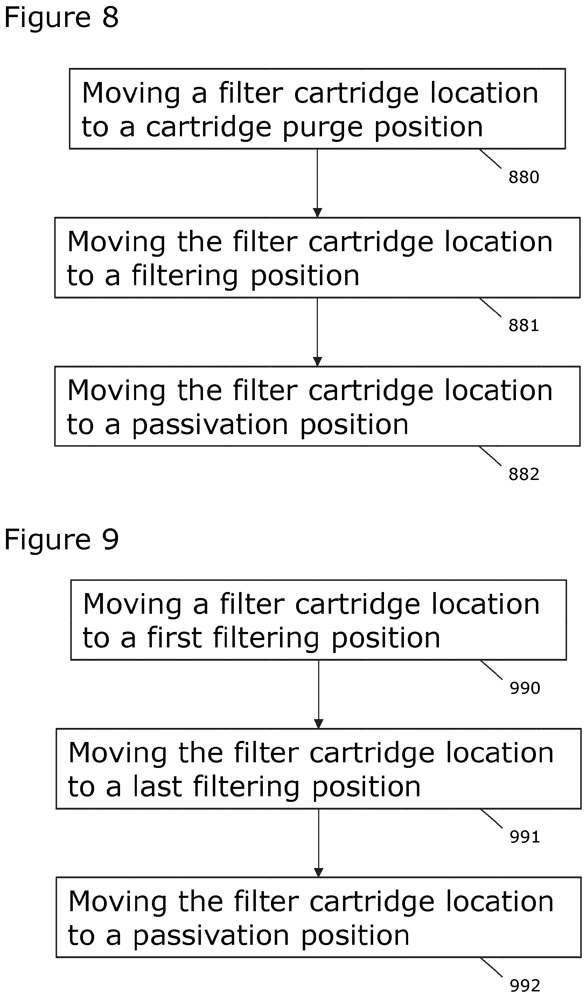

Figure 7 shows another example of how a filter cartridge 706 can be passivated when it is in the passivation position. Although two passivation inlet channels 730 are shown in the hub 709 of Figure 9, it will be appreciated from the discussion that follows that these passivation inlet channels 730 are not required and therefore can be omitted such that there are not any channels through the hub 709 in the vicinity of the passivation position.

In Figure 7, the filtration system includes a spike 740 for piercing the filter cartridge 706 when it is in the passivation position. The spike 740 has a conduit running through it such that it can communicate a passivation substance into the filter cartridge 706 without it passing through the inlet and outlet ports of the filter cartridge. This can be advantageous is some applications because it avoids the risk of any passivation substance getting caught in a passivation inlet channel 730 in the hub 709 or a channel through the filter cartridge support 710. If the passivation substance gets caught in a channel through the filter cartridge support in particular, it may impede the flow of gas through the channel when the filter cartridge support is in a different orientation with respect to the hub 709 such that it is in a different operational position. Therefore, keeping the passivation substance away from the inlet and outlet ports of the filter cartridge 706 can improve the ongoing performance of the filtration system.

Returning to Figures 6a and 6b, we will now describe an advantageous arrangement of the inlet manifold 627 and the outlet manifold 628. The inlet manifold 627 and the outlet manifold 628 are arranged such that the rate of gas flow through the filter cartridge in the last filtering position is greater than the rate of gas flow through the filter cartridge in the first filtering position. Furthermore, the inlet manifold 627 and the outlet manifold 628 can be arranged such that the rate of flow through the filter cartridges at the intermediate filtering positions increases with the index of the filtering position.

This arrangement of the inlet manifold 627 and the outlet manifold 628 has been found to be beneficial because a filter cartridge gets increasingly filled up with residue as it remains online. A filter cartridge that is in the last filtering position 619 will have been online for longer than the filter cartridge in each of the preceding filtering positions 616-618. Therefore, if there was no modulation of the flow through the filter cartridges, the gas would tend to pass through the filter cartridges that have just come online instead of the filter cartridges that have come online earlier. This could lead to sub-optimal filtration because maximum usage of each of the filter cartridges would not be achieved.

In the example of Figure 6a (although it is difficult to see in the drawing), the inlet manifold 627 and the outlet manifold 628 are tapered such that they have a cross-sectional area in the vicinity of the first filtering location 616 that is greater than the cross-sectional area in the vicinity of the last filtering location 619. Tapering the cross-sectional area of the manifolds 627, 628 in this way can ensure that each of the filter cartridges provide a more even contribution to the overall filtration that is provided by the filtration system.

Additionally or alternatively, the gas inlet port 604 can open into the inlet manifold 627 at a position that is closer to the last filter cartridge active inlet port (at the last filtering location 619) than the first filter cartridge active inlet port (at the first filtering location 616). Similarly, the gas outlet port 605 opens into the outlet manifold 628 at a position that is closer to the last filter cartridge active outlet port (at the last filtering location 619) than the first filter cartridge active outlet port (at the first filtering location 616).

Although filtration systems of the present disclosure have been described with reference to an additive manufacturing apparatus, it will be appreciated that the filtration system can be used in any other suitable application and that it is not inextricably tied to use with additive manufacturing apparatuses. One such application is battery manufacture.

Figure 8 shows a process flow that illustrates a method of operating a filtration system. For this process flow, the filtration system comprises a hub and a filter cartridge support. The hub includes: a gas inlet port for receiving dirty gas; a gas outlet port for providing clean gas; and an inert gas channel for communicating an inert gas, such as argon. The filter cartridge support is for accommodating at least three filter cartridges at respective filter cartridge locations.

The method involves moving the filter cartridge support relative to the hub such that a filter cartridge located in a filter cartridge location cycles between the following positions:
- at step 880, a cartridge purge position at which an inlet port of the filter cartridge is in fluid connection with the inert gas channel of the hub.
- at step 881, a filtering position, at which: the inlet port of the filter cartridge is in fluid connection with the gas inlet port of the hub; and an outlet port of the filter cartridge is in fluid connection with the gas outlet port of the hub.
- At step 882, a passivation position at which the filter cartridge can be passivated and subsequently removed from the filter cartridge support.

Figure 9 shows a process flow that illustrates another method of operating a filtration system. For this process flow, the filtration system comprises a hub and a filter cartridge support. The hub comprises: a gas inlet port for receiving dirty gas; a gas outlet port for providing clean gas; at least one filter cartridge active inlet port and at least one filter cartridge active outlet ports wherein each of the filter cartridge active inlet and outlet ports are for communicating a gas to and from a filter cartridge; an inlet manifold; and an outlet manifold. The gas inlet port and each of the filter cartridge active inlet ports open into the inlet manifold. The gas outlet port and each of the filter cartridge active outlet ports open into the outlet manifold. The filter cartridge support is for accommodating at least three filter cartridges at respective filter cartridge locations.

The method involves moving the filter cartridge support relative to the hub such that a filter cartridge located in a filter cartridge location cycles between the following positions:
- at step 990, a first filtering position at which the filter cartridge is fluidly connected to: at least one of the at least one filter cartridge active inlet ports of the hub; and at least one of the at least one filter cartridge active outlet ports of the hub.
- at step 991, a last filtering position at which the filter cartridge is fluidly connected to: at least one of the at least one filter cartridge active inlet ports of the hub; and at least one of the at least one filter cartridge active outlet ports of the hub.
- at step 992, a passivation position at which the filter cartridge can be passivated and subsequently removed from the filter cartridge support.

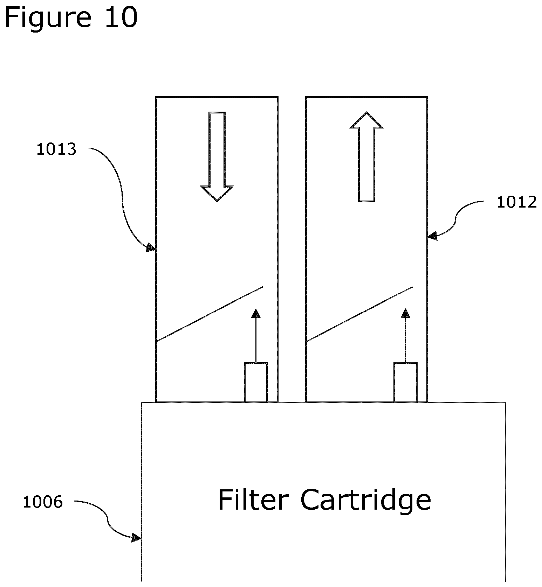

Figure 10 schematically illustrates another example of a filter cartridge that can be used with the filtration systems that are described herein.

As discussed above, the smoke / condensate that is produced during the laser sintering of aluminium, titanium and other reactive materials will oxidise rapidly when introduced to oxygen, thereby risking a thermal event. It is therefore beneficial for the filtrations system to provide protection by avoiding the escape of said condensate. A particular concern can arise if an automatic filter cartridge loading mechanism fails, such that there is a filter cartridge missing from the filtration system. In which case, the condensate could flow to atmosphere through a filter gas flow inlet channel 1013 associated with a filter cartridge location of the interface to which no filter cartridge is attached.

In Figure 10, a check valve is provided that prevents gas flow through the filter gas flow inlet channel 1013 if a filter cartridge is not attached to it. Similarly, in this example, a check valve is also provided that prevents gas flow through the filter gas flow outlet channel 1012 if a filter cartridge is not attached to it. In this way, a check valve is provided associated with each filter gas flow channel associated with each filter cartridge location in the interface, in order to stop the flow to each of the individual ports.

In the example of Figure 10, the check valve associated with the filter gas flow outlet channel 1012 is normally closed by spring pressure. The check valve associated with the filter gas flow inlet channel 1012 is normally closed by system pressure in the hub of the filtration system acting above it.

The filter cartridge 1006 has an actuating pin for each filter gas flow channel 1012, 1013 that mechanically pushes the check valve open when the filter cartridge is attached to the interface. If the filter cartridge is missing the actuating pin, the check valve will not be pushed open and the condensate will not be able to flow through the interface towards the filter cartridge.

Figure 11 shows another example embodiment of a filtration system.

It can be advantageous for the filter online time to be flexible. For example, different processes produce differing levels of condensate creation. Also, for AM processes the powder layer depth, laser quantity and power all have a bearing on filter loading. It can be beneficial for the loading in the filter cartridge to be predictable prior to passivating. This is because different condensate loading will demand different levels of passivation media. Removing a filter cartridge from service too soon will be wasteful. Leaving a filter cartridge online for too long can be dangerous.

The filtration system of Figure 11 can advantageously provide a flexible filtration process.

In Figure 11, a sensor measures a pressure differential across the last filter cartridge in the multi-filter online phase. This is implemented in Figure 11 by means of two pressure lines: one that is connected to the filtration system before the gas flows through the last filter cartridge; and one that is connected to the filtration system after the gas flows through the last filter cartridge. These two pressure lines can feed a mechanical plunger such that the pressure differential between the two pressure lines controls the position of the mechanical plunger. When the pressure differential exceeds a threshold level that is defined by a plunger spring, the plunger is pushed to earth. This movement can be sensed in any known way such as by a light beam (an opto-switch, an earth path (a resistive sensor) or any other way. A controller associated with the filtration system can receive a signal from the sensor that indicates that the electrical circuit has been completed because the plunger has moved, and in response it causes the actuator to move the interface to its next position. The filter cartridge that was in the last filtering position therefore moves to the passivation position. In this way, the filter cartridge can be removed from an online filtering position with an optimum fill point and with a quantity of condensate that is known to be safe to be passivated in the passivation position.

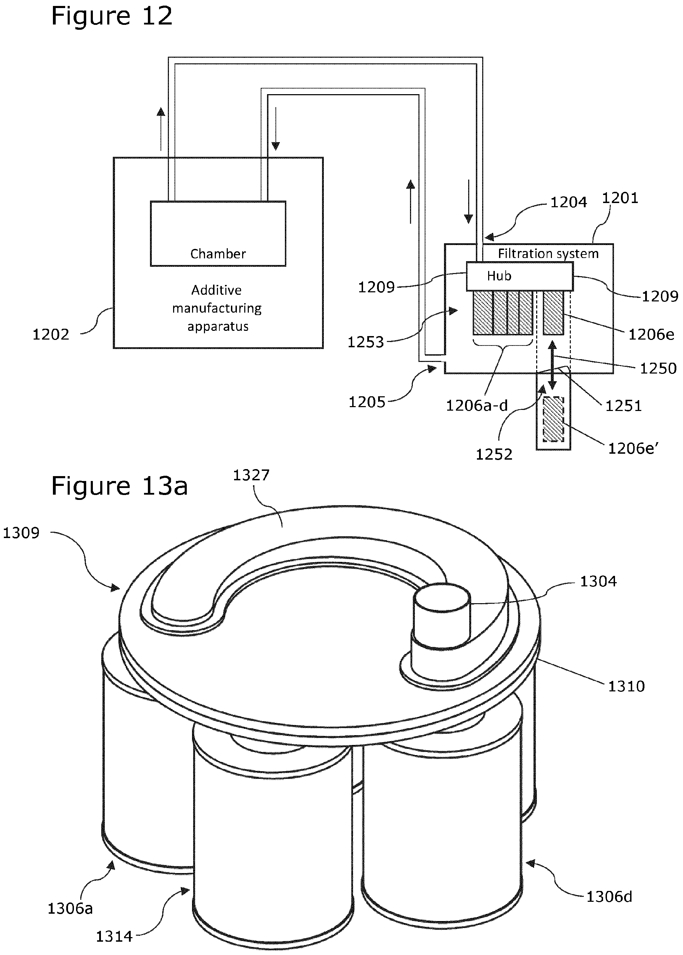

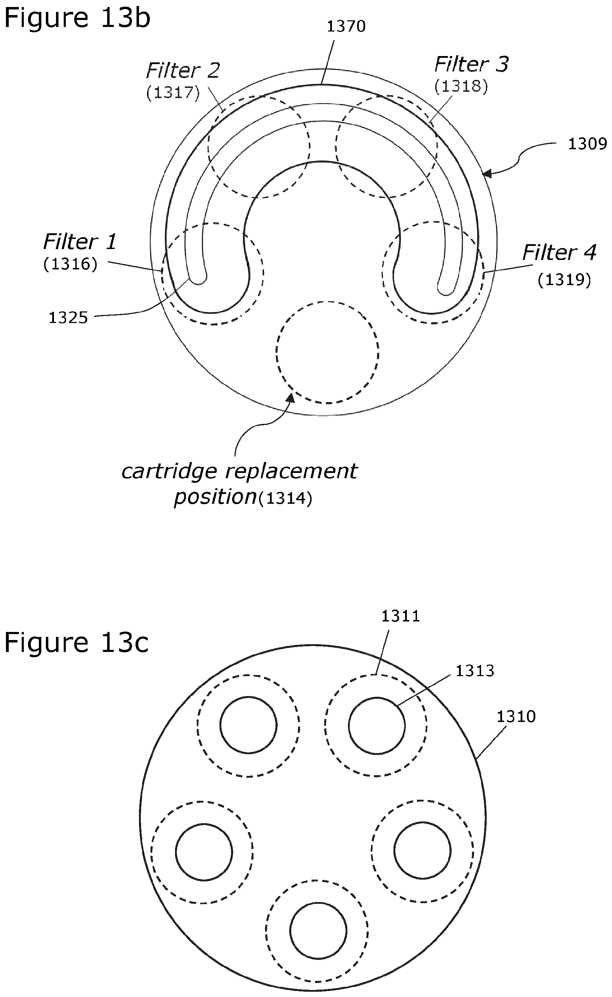

Figure 12 is a schematic view of another filtration system 1201 according to an embodiment of the present disclosure, which is connected to an additive manufacturing (AM) apparatus 1202. The filtration system 1201 includes a gas inlet port 1204 for receiving dirty gas from the print chamber of the AM apparatus 1202. As shown in the drawing, the gas inlet port 1204 is connected to a hub 1209 within the filtration system 1201. The hub 1209 of this embodiment will be described in more detail below with reference to Figures 13a and 13b. The filtration system 1201 also includes a gas outlet port 1205 for providing clean gas back to the print chamber of the AM apparatus 1202. In contrast to some of the earlier embodiments, in this example the gas outlet port 1205 is not part of the hub 1209.

In this example, up to five replaceable filter cartridges can be connected to the hub 1209 at any one time. Four of these replaceable filter cartridges 1206a-d are at filtering positions such that they can actively filter the dirty gas that is received by the filtration system 1201. The hub 1209 of this example also has a cartridge replacement position, at which: a used filter cartridge 1206e can be passivated and unloaded; and then a new filter cartridge 1206e can be purged and loaded.

Figure 13a shows a perspective view of the hub 1309 of Figure 12, and Figure 13b shows a view of the same hub 1309 from underneath. The hub 1309 includes a gas inlet port 1304 (that receives dirty gas), which opens into an inlet manifold 1327. In this example, the hub 1309 also includes a single filter cartridge active inlet port 1325 that also opens into the inlet manifold 1327. In the same way that is discussed above, the active inlet port 1325 is in a lower surface of the hub 1309 and is for communicating dirty gas received from the gas inlet port 1304 (in an upper surface of hub 1309) to filter cartridges via the inlet manifold 1327.

Figure 13c shows a view of a filter cartridge support 1310 from underneath, when no filter cartridges are connected to it. In the same way that is described above in relation to earlier embodiments, the filter cartridge support 1310 is implemented as a plate that sits between the hub 1309 and the filter cartridges. In this example it is for accommodating five filter cartridges at respective filter cartridge locations 1311. At each filter cartridge location 1311, a filter gas flow inlet channel 1313 extends through the thickness of the filter cartridge support 1310 such that it can facilitate gas flow between the hub 1309 and the filter cartridges. The filter cartridge support 1310 is rotatable relative to the hub 1309 such that a filter cartridge that is attached to the filter cartridge support 1310 cycles between the different positions of the hub 1309. More particularly, an actuator (not shown) rotates the filter cartridge support 1310 such that a filter cartridge location 1311 moves between the following different positions of the hub 1309:
- first to fourth filtering positions 1316, 1317, 1318, 1319, at which the filter cartridge is actively filtering the dirty gas that is received by the filtration system; and
- a cartridge replacement position 1314, at which a used filter cartridge can be removed from the filter cartridge support 1310 and a new filter cartridge can be attached to the filter cartridge support 1310. In this way, the cartridge replacement position 1314 can be considered as an unloading position and a loading position.

Figure 13b also shows an inlet port seal 1370. When the filter cartridge support 1310 and the hub 1309 are held together, with the inlet port seal 1370 located between them, the inlet port seal 1370 encloses the active inlet port 1325 in the hub 1309 and it also encloses the filter gas flow inlet channel 1313 in the filter cartridge support 1310. In this way, leaks of the dirty gas as it flows from the hub 1309 to the filter cartridge support 1310 are reduced.

Returning to Figure 12, in this example, the filtration system also includes a cartridge locating mechanism, which is schematically represented by the double-ended arrow 1250 in Figure 12. The cartridge locating mechanism is configured to move a used filter cartridge away from the filter cartridge support (and therefore also away from the hub 1209) to a filter cartridge processing position. In this way, the used filter cartridge is removed from the filter cartridge support. The filter cartridge processing position is illustrated by the filter cartridge that is identified with reference 1206e' in Figure 12. The filter cartridge processing position is spaced apart from the hub 1209. The cartridge locating mechanism can also move a new filter cartridge from the filter cartridge processing position towards the hub 1209, in order to attach the new filter cartridge to the hub 1209 via the filter cartridge support.

In some examples, the cartridge locating mechanism can include a piston. In other examples, it can include a bellows. Use of a bellows can provide a big benefit in terms of length when retracted. A ram of a piston can require its housing length to be the same as the rod length, whereas a bellows may be very small when it is resting. Beneficially, this can reduce the machine height by at least 350mm.

The filtration system 1201 also includes a movable barrier 1251 that selectively isolates: i) a filter cartridge processing chamber 1252, which houses the filter cartridge processing position (as represented by the filter cartridge with reference 1206e' in Figure 12); from ii) a main chamber 1253, which houses the cartridge replacement position (as represented by the filter cartridge with reference 1206e in Figure 12). This movable barrier can also be referred to as a trap door. This isolation can prevent any significant gas flow between the two chambers such that a gas that is used to perform an operation in one of the chambers does not significantly affect the other chamber. Examples of such operations include purge and passivation operations, and are provided below.

In this example, as illustrated in Figure 12, the gas outlet port 1205 (for providing clean gas back to the AM apparatus 1202) is in fluid communication with the main chamber 1253. Therefore, the gas that enters the filter cartridges 1206a-e through the hub 1209, exits the filter cartridges 1206a-e, after it has been cleaned, into the main chamber 1253. In order to maintain the safety of the filtration system 1201, in this example the main chamber 1253 is filled with argon. In this way, the main chamber 1253 can be considered as an argon-rich loading box. Also, beneficially, if there are any leakages associated with the hub 1209 then those leakages are into the safety of the argon filled main chamber 1253. As a further benefit, the use of only one manifold in the hub 1209 (as opposed to the two manifolds of some of the earlier embodiments) can further reduce any undesirable pressure drop that is caused by the filtration system 1201.

The filtration system of Figure 12 also includes a controller (not shown) that is configured to control the cartridge locating mechanism and the movable barrier 1251 in order to: remove a used filter cartridge from the filter cartridge support / hub 1209; passivate the used filter cartridge; purge a new filter cartridge; and then attach the new, purged, filter cartridge to the filter cartridge support / hub 1209. This will now be described in more detail.

In order to remove and passivate a used filter cartridge, the controller in this example is configured to:
- Move the movable barrier 1251 such that the filter cartridge processing chamber 1252 is not isolated from the main chamber 1253. That is, the movable barrier 1251 is moved such that there is an opening between the filter cartridge processing chamber 1252 and the main chamber 1253 through which the used filter cartridge can be moved.
- Activate the cartridge locating mechanism in order to move the used filter cartridge 1206e away from the filter cartridge support / hub 1209 to the filter cartridge processing position 1206e' in the filter cartridge processing chamber 1252.
- Move the movable barrier 1251 such that the filter cartridge processing chamber 1252 is isolated from the main chamber 1253. That is, the opening between the two chambers is closed such that any significant gas flow between the two chambers is prevented.
- Optionally, prevent access to the filter cartridge processing position 1206e. This can be performed, for example, by locking a door to the filter cartridge processing chamber 1252 through which the used, passivated, filter cartridge will be removed.
- Initiate a passivation process to passivate the used filter cartridge in the filter cartridge processing position 1206e'. In one example, air can be introduced into the filter cartridge processing chamber 1252 to passivate the filter reactive particulate in the used filter cartridge. In this way, the filter cartridge processing position 1206e' can be considered as a passivation position.
- Enable access to the filter cartridge processing position 1206e', such that the used and passivated filter cartridge can be removed. In one example, this can

be performed by unlocking the door to the filter cartridge processing chamber 1252. Once the passivation process is complete, the filter cartridge processing chamber 1252 is full of air and therefore the door can be opened safely. The used filter cartridge can then drop out of the filter cartridge processing chamber 1252 for any subsequent encapsulation processes that may be desirable.

In order to purge and load a new filter cartridge, the controller in this example is configured to:
- move the movable barrier 1251 such that the filter cartridge processing chamber 1252 is isolated from the main chamber 1253. In this way, a new filter cartridge can be located in the filter cartridge processing chamber 1252 without significantly affecting the environment in the main chamber 1253.
- Optionally, access to the filter cartridge processing position can be enabled by unlocking the door to the filter cartridge processing chamber 1252.
- Upon receipt of a new filter cartridge in the filter cartridge processing position 1206e': optionally prevent access to the filter cartridge processing position (for example by locking the door to the filter cartridge processing chamber); and initiate a purge process to purge the new filter cartridge in the filter cartridge processing position 1206e'. In this way, the filter cartridge processing position 1206e' can be considered as a cartridge purge position. In this example, the purge process includes purging the filter cartridge processing chamber 1252, which contains the new filter cartridge, with argon. The oxygen levels in the filter cartridge processing chamber 1252 can be measured with an oxygen sensor, and then once the oxygen levels in the filter cartridge processing chamber 1252 drop below a threshold level (such as 1 ppm (part-per-million)), the filter cartridge processing chamber 1252 can be considered fully purged and the process can continue.
- Move the movable barrier 1251 such that the filter cartridge processing chamber 1252 is not isolated from the main chamber 1253. Again, this means that there is an opening between the chambers through which a filter cartridge can pass.
- Activate the cartridge locating mechanism in order to move the new filter cartridge away from the filter cartridge processing position 1206e' towards the filter cartridge support / hub 1209, in order to attach the new filter cartridge to the hub 1209.

Returning to Figures 13a to 13c, the filter cartridge 1306d in the fourth filtering position 1319 should be the most heavily loaded filter of the four. This is because it is next to come out of the system as the filter cartridge support 1309 will rotate that filter cartridge 1306d to the cartridge replacement position 1314 as its next position. This filter loading is advantageously influenced by positioning the inlet port 1304 such that it is right over the top of the fourth filtering position 1319. Also, as shown in Figure 13a, the inlet manifold 1327 is tapered down towards the first filtering position 1316. That is, the cross-sectional area of the inlet manifold 1327 decreases along the gas flow path from the fourth filtering position 1319 to the first filtering position 1306. Both of these design elements can promote flow to the filter cartridge 1306d in the fourth filtering position 1319.

In some examples, a sensor can be used to detect the loading of the filter cartridge 1306d in the fourth filtering position 1319. Such a sensor can provide a sensed-loading-signal, which can be used by the controller to cause the filter cartridge support 1309 to rotate to the next position, thereby bringing the filter cartridge 1306d in the fourth filtering position 1319 (which has been detected as being full) to the cartridge replacement position 1314.

When a filter cartridge is first introduced to a process at the first filtering position 1316, it can be less efficient than a partially caked filter cartridge. If a filtration system such as the ones described herein were not used, then this can cause some defects in the AM prints such as lines, flaws and surface finish difference, for example. However, in the filtration system of Figures 13a to 13c, there are filter cartridges that have already been actively filtering when a new filter cartridge is brought online. Therefore, there are partially caked filter cartridges when a new filter cartridge is introduced and the filter cartridge at the fourth filtering position 1319 is expelled. This can be considered as blending the performance of the filter cartridges, and can provide more consistent filtration efficiency throughout the build in the AM machine, which is a very significant benefit.

In a similar way, the filtration system of Figures 13a to 13c can beneficially achieve a consistent flow rate. In a similar way to that described above, when a filter cartridge is removed and replaced with a new filter cartridge, with prior art systems the flow rates in the system can climb because the pressure drop across the filter has reduced significantly. These can need to be controlled as excess flow can disrupt the powder bed, potentially removing areas of powder which are required to be sintered and also contaminating the print area and laser. However, using the filtration system of Figures 13a to 13c can reduce any disruption to the flow rate. Again, this is because the flow is shared across the 4 filter locations, with the filter cartridges in filtering positions 1-3 being only partially loaded. Therefore, the filtration system can be capable of absorbing the flow rate from the AM machine without significant change in pressure (ΔP increase).

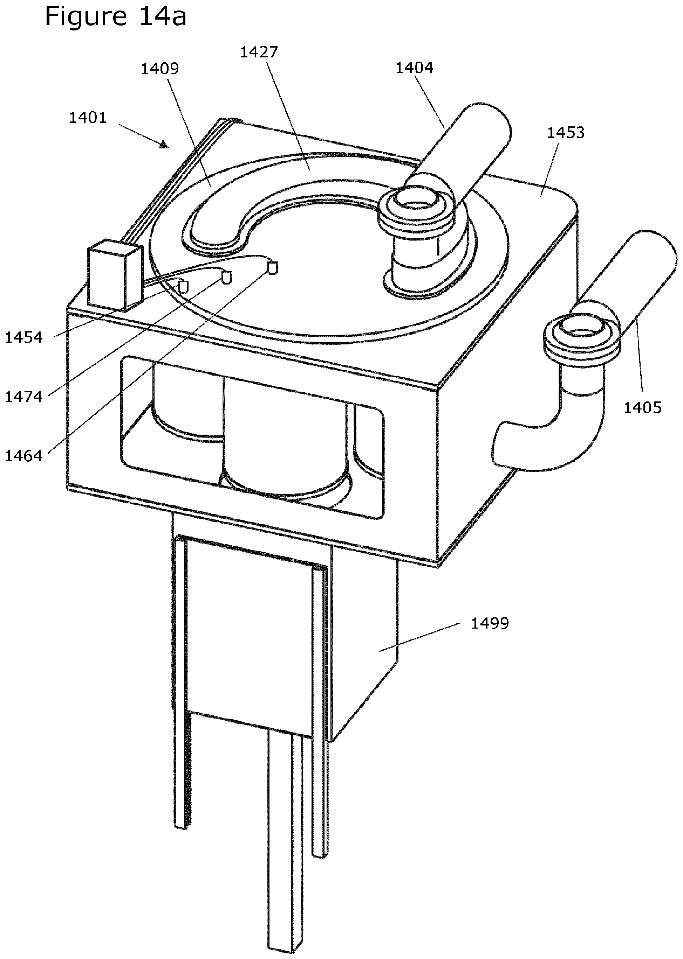

Figure 14a shows another embodiment of a filtration system 1401 according to the present disclosure. The filtration system 1401 functions in a similar way to the one that is described with reference to Figures 12 and 13a-13c. In Figure 14a, the following features, which each have the same functionality as the corresponding features in earlier embodiments, are labelled: a gas inlet port 1404, a gas outlet port 1405, a hub 1409, a main chamber 1453, a filter cartridge processing chamber 1499, and an inlet manifold 1427.

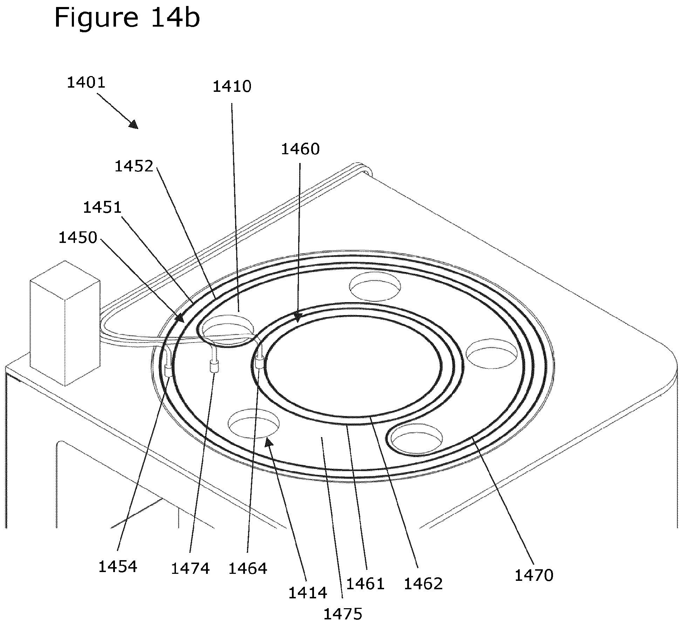

Figure 14b shows another view of the filtration system 1401 of Figure 14a. In contrast to Figure 14a, the hub has been removed so that a sealing system, an inlet port seal 1470, a central cavity 1475, and a filter cartridge support 1410 are visible. The sealing system comprises an outer double seal 1450, an inner double seal 1460, an outer double seal gas inlet 1453, and an inner double seal gas inlet 1464. The outer double seal 1450 and the inner double seal 1460 each form a seal between the filter cartridge support 1410 and the hub 1409. Also, as will be discussed in detail below, the outer double seal gas inlet 1453 and the inner double seal gas inlet 1464 are used to pressurise respective sealing cavities that are provided by each of the outer double seal 1450 and the inner double seal 1460. In this way, dirty gas leaked from the gas flow channels is contained within the filtration system 1401 rather than leaking to outside environment. The sealing system is described in more detail below.

The central cavity 1475 is defined by the outer double seal 1450, the inner double seal 1460, an upper surface of the filter cartridge support 1410, and a lower surface of the hub 1409 (the lower surface of the hub 1409 is not visible in Figures 14a and 14b). The inlet port seal 1470 is analogous to the inlet port seal 1370 of Figure 13c. The inlet port seal 1470 is attached to the hub 1409 and seals the active inlet port in the hub (the active inlet port in the hub is not shown in Figure 14b) from the central cavity 1475. The inlet port seal 1470 in this example can be referred to as having a kidney shape.

In a similar way to that described above with reference to Figures 13a - 13c, the filter cartridge support 1410 of Figure 14 is rotatable such that a filter cartridge location moves between: first to fourth filtering positions , which are analogous to the first to fourth filtering positions 1316 - 1318 of the filtering system 1301 of Figures 13a - 13c; and a cartridge replacement position 1414, which is analogous to the cartridge replacement position 1314 of the system of Figures 13a - 13c. When the filter cartridge support 1410 is stationary the inlet port seal 1470 seals the filter cartridge gas flow channels located at the filtering positions at which the filter cartridge is actively filtering the dirty gas (in the example of Figure 14b, these are the first to fourth filtering positions) from the central cavity 1475. In contrast, the filter cartridge gas flow channel located at the cartridge replacement position 1414 opens into the central cavity 1475 but is not in a fluid connection with the inlet manifold 1427. The inlet port seal 1470 thus prevents the dirty gas present in the inlet manifold 1427 from leaking into the central cavity 1475 when the filter cartridge support 1410 is stationary. However, when the filter cartridge support 1410 begins to rotate, the filter cartridge gas flow channel which moves from the last filtering position towards the cartridge replacement position 1414 for a time overlaps with both the inlet manifold 1427 and the central cavity 1475. This creates a fluid connection between the inlet manifold 1427 and the central cavity 1475, allowing dirty gas to leak from the inlet manifold 1427 to the central cavity 1475 while the filter cartridge support 1410 is rotating.

The sealing system of Figures 14a,b prevents the dirty gas which has leaked into the central cavity 1475 from leaking to the outside environment by sealing the central cavity 1475 with the outer and inner double seals 1450, 1460. Any such leak can represent a significant safety hazard. The sealing system can also prevent dirty gas from bypassing the filter cartridges by flowing from the inlet manifold 1427 to the central cavity 1475, and then from the central cavity 1475 directly to the main chamber 1454 without passing through a filter cartridge. If this were to happen, then it would result in a reduction in the effectiveness of the filtration system 1501.

The outer double seal 1450 comprises a first outer sealing member 1451 and a second outer sealing member 1452. The first outer sealing member 1451 and the second outer sealing member 1452 are arranged concentrically with respect to each other. In this way the first and second sealing members provide a double seal between the central cavity 1475 and the main chamber 1253.

The first outer sealing member 1451 and the second outer sealing member 1452 are substantially circular. In this way they encompass all the gas flow channels at any position of the cartridge support 1410 as it rotates about a central axis.

The first and second outer sealing members 1451, 1452 are resiliently deformable in this example. This increases the efficiency of the seal when an external force is applied to hold together the filter cartridge support 1410 and the hub 1409. The first and second outer sealing members 1451, 1452 may be O-rings. The first and second outer sealing members 1451, 1452 may comprise polytetrafluoroethylene (PTFE), rubber, or silicone, or a combination of these materials.

The first outer sealing member 1451 and the second outer sealing member 1452 in this example are attached to the hub 1409. In use, the filter cartridge support 1410 is brought into contact with the first and second outer sealing members 1451, 1452. In this configuration the first and second outer sealing members 1451, 1452 form a seal between the hub 1409 and the filter cartridge support 1410. Alternatively, the first outer sealing member 1451 and the second outer sealing member 1452 may be attached to the filter cartridge support 1410 instead of the hub 1409. In use, the hub 1409 is then brought towards the filter cartridge support 1410 such that the first and second outer sealing members 1451, 1452 contact the hub 1409 to form the seal.

When the seal is formed, the first and second outer sealing members 1451, 1452 define a sealing cavity therebetween. The outer double seal gas inlet 1454 is positioned between the first and second outer sealing members 1451, 1452 such that it can communicate gas to the sealing cavity. We will refer to this gas as a "sealing gas" to distinguish it from other gases that are present in the filtration system. When the sealing cavity is filled by the sealing gas through the outer double seal gas inlet 1454, the efficiency of the outer double seal 1450 against leaks of dirty gas from the central cavity 1475 can be increased. This is because the sealing gas in the sealing cavity can be pressurised such that it is at a higher pressure than gas in the central cavity 1475. Therefore, if any dirty gas does leak into the central cavity 1475 from the inlet manifold 1427, that dirty gas is prevented from passing the outer double seal 1450 due to the pressure differential.

The sealing gas in this example is an inert gas. This is so that the addition of the sealing gas to the system does not increase the risk of reaction with the outside environment and within the filtration system 1401. For example, the sealing gas may be considered likely to leak out of the (pressurised) sealing cavities into the main chamber 1453, such that it will then be drawn into the additive manufacturing apparatus (not shown). The sealing gas may be the same gas as the clean gas used in the additive manufacturing apparatus during the additive manufacturing process or it may be a different gas. Using the same gas for both the additive manufacturing process and as the sealing gas means that only one type of gas needs to be provided, which can simplify the structure of the filtration system and can also lower transportation and handling costs. The sealing gas may be for example argon, nitrogen, or air.

As can be seen from Figure 14b the inner double seal 1460 is implemented in the same way as the outer double seal 1450 and therefore the description of the outer double seal 1450 provided above applies equally to the inner double seal 1460.

Analogously to the outer double seal 1450, therefore, the inner double seal 1460 comprises a first inner sealing member 1461 and a second inner sealing member 1462, defining a sealing cavity therebetween. The first and second inner sealing members 1461, 1462 form a seal between the hub 1409 and the filter cartridge support 1410. Also analogously to the outer double seal 1450, when the sealing cavity is filled by the sealing gas through an inner double seal gas inlet 1464, the efficiency of the inner double seal 1460 against leaks of dirty gas from the central cavity 1475 can be increased.

Figure 14b also shows a central cavity gas outlet 1474. The central cavity gas outlet 1474 is configured to evacuate gas from the central cavity 1475, which can be back into the dirty gas flow. This can be especially useful before a filter cartridge is unloaded. Use of such a central cavity gas outlet 1474 can lower the risk of leaks of dirty gas from the central cavity 1475 to the main chamber 1453 in which the filtration system 1401 is located. The central cavity gas outlet 1474 can be considered as an optional feature, in that, in some applications, the downsides associated with dirty gas potentially leaking from the central cavity 1475 to the main chamber in which the filtration system 1401 is located (and thereby bypassing the filter cartridges) may be acceptable.

The sealing system may be implemented for any of the embodiments of the filtration system described here.

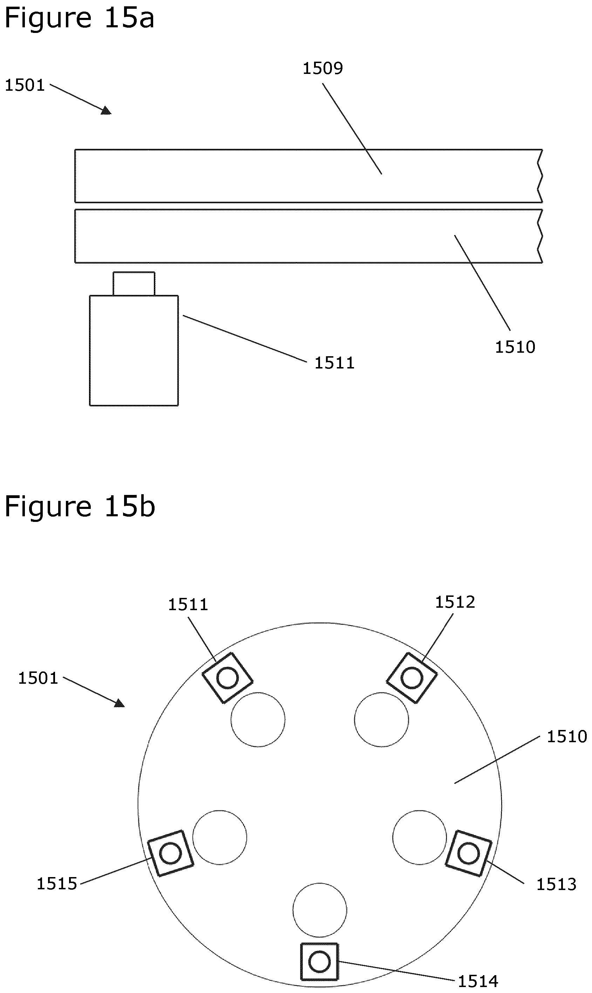

Figures 15a and 15b show another filtration system 1501 according to an embodiment of the present disclosure. The filtration system 1501 has the same configuration as the filtration system of 1401 in that includes outer and inner double seals, although they are not visible in Figures 15a and 15b. In addition, the filtration system 1501 includes a clamping mechanism used to apply a force to urge the filter cartridge support 1510 and the hub 1509 together. When the sealing system of Figure 14b is used, the seals are activated by applied pressure, which may be provided by the clamping mechanism of Figures 15a and 15b.

The pressure required to keep the outer and inner double seals sufficiently tight, so that dirty gas leaks are minimised, can require a clamping force that would make rotation of the filter cartridge support difficult. Furthermore, the resulting friction could damage the seals and/or cause deformation of the hub.

However, in the examples described here, the time for which the filter cartridge support rotates relative to the hub is a fraction of the time for which it is stationary. This means that a clamping force sufficiently high to keep the seals effective can be applied when the system is stationary, and a lower clamping force can be applied while the filter cartridge support rotates. For instance, this embodiment has five filter cartridge locations, equiangularly circumferentially spaced around the filter cartridge support 1510. Therefore, to advance a filter cartridge between two adjacent positions the filter cartridge support 1510 rotates in 72 degrees increments. Each rotation takes about 3 seconds. The rotation repeats at around 7 hours, depending on process loading. Therefore, the filter cartridge support 1510 is stationary for most of the operation of the filter cartridge system 1501. In other words, the duration of the rotation is three orders of magnitude smaller than the time period in which the filter cartridge support 1510 is stationary in this example. The gas flow channel that moves between the last filtering position and the cartridge replacement position overlaps the inlet manifold and the central cavity for less than 1 second, for instance for 0.5 second. This means that the potential for dirty gas leaks due to a lower clamping force used while the filter cartridge support 1510 rotates can be considered acceptably low.

In the example embodiment shown in Figures 15a and 15b the clamping mechanism comprises a plurality of clamps. Five clamps 1511 - 1515 are shown out of a total of five in this embodiment. The clamps are equidistantly spaced around an outer edge of the hub 1509. Using a plurality of clamps in this way can provide an even clamping force to the hub 1509 and the filter cartridge support 1510, which can be important for implementing a reliable seal.

In use, the clamping mechanism is configured to apply a first clamping force when the filter cartridge support 1510 is rotating relative to the hub 1509, and to apply a second clamping force when the filter cartridge support 1510 is not rotating relative to the hub 1509. The second clamping force is greater than the first clamping force. In this way, the first clamping force is sufficiently high to ensure effective sealing while the filter cartridge support 1510 is stationary relative to the hub 1509, while the second clamping force is low enough to allow rotation of the filter cartridge support 1510 relative to the hub 1509 without damaging the seals. Since the filter cartridge support 1510 typically rotates for less than 1 second and stays stationary for about 7 hours, the time for which the lower clamping force (the second clamping force) is applied is relatively short compared to the time for which the higher clamping force (the first clamping force is applied). In this way, because the clamping force is decreased only while the filter cartridge support 1510 is rotating, the time in which leaks from the central cavity to the outside environment can occur is minimised.

The first clamping force may be between 500 newtons and 1000 newtons. The second clamping force may be up to 500 newtons, for example 200 newtons.

The clamps in this embodiment are pneumatic cylinders. However, other types of clamps could be used, such as hydraulic clamps, pipe and cable clamps, active clamps, passive (spring) clamps, or cam style clamps.

The clamping mechanism may further comprise a ball bearing interface positioned between the pneumatic cylinders and the filter cartridge support 1510. The ball bearing interface reduces friction while the filter cartridge support 1510 rotates, thus reducing the risk of deformation of the filter cartridge support 1510.

The clamping mechanism may further comprise an actuator for each clamp 1511 - 1515 which sets the clamping force. The actuator provides a means of automatically adjusting the clamping force and thus the pressure applied to the seals. For instance, a controller may be provided for controlling the rotation of the filter cartridge support 1510 relative to the hub 1509, and also for controlling the clamping force that is applied by the clamping mechanism.

## Claims

1. A filtration system comprising:
a hub (1409) comprising:
a gas inlet port (1404) for receiving dirty gas;
a filter cartridge active inlet port, wherein the filter cartridge active inlet port is for communicating a gas to a filter cartridge;
a filter cartridge support (1410) for accommodating a plurality of filter cartridges at respective filter cartridge locations, wherein the filter cartridge support (1410) comprises a gas flow channel at each of the filter cartridge locations, wherein each gas flow channel provides a fluid path through the thickness of the filter cartridge support (1410);
an actuator configured to rotate the filter cartridge support (1410) relative to the hub (1409) such that a filter cartridge located in each filter cartridge location cycles between:
a filtering position, at which the filter cartridge is fluidly connected to at least one of the at least one filter cartridge active inlet ports of the hub (1409);
a cartridge replacement position (1414), at which a used filter cartridge can be removed from the filter cartridge support (1410) and a new filter cartridge can be attached to the filter cartridge support (1410);
a sealing system comprising:
an outer double seal (1450) that includes a first outer sealing member (1451) and a second outer sealing member (1452), wherein the first and second outer sealing members each provide a seal between the hub (1409) and the filter cartridge support, and wherein the first and second outer sealing members are arranged concentrically with respect to each other such that they define a sealing cavity therebetween, and wherein the outer double seal (1450) further comprises an outer double seal gas inlet (1453) for communicating sealing gas to the sealing cavity between the first and second outer sealing members;
an inner double seal (1460) that includes a first inner sealing member (1461) and a second inner sealing member (1462), wherein the first and second inner sealing members each provide a seal between the hub (1409) and the filter cartridge support (1410), and wherein the first and second inner sealing members are arranged concentrically with respect to each other such that they define a sealing cavity therebetween, and wherein the inner double seal (1460) further comprises an inner double seal gas inlet (1464) for communicating sealing gas to the sealing cavity between the first and second inner sealing members, and wherein each gas flow channel in the filter cartridge support (1410) is located between the inner and the outer double seals.

2. The filtration system of claim 1, further comprising a clamping mechanism configured to apply a clamping force to urge the filter cartridge support and the hub towards each other;
wherein the clamping mechanism is configured to:
apply a first clamping force when the filter cartridge support is rotating relative to the hub; and
apply a second clamping force when the filter cartridge support is not rotating relative to the hub, wherein the second clamping force is greater than the first clamping force.

3. The filtration system of claim 2 wherein the clamping mechanism comprises a plurality of clamps.

4. The filtration system of claim 3 wherein each of the plurality of clamps comprises pneumatic cylinders.

5. The filtration system of claim 4 further comprising a ball bearing interface positioned between the pneumatic cylinders and the filter cartridge support.

6. The filtration system of any of claims 2 - 5 wherein the pressure applied when the filter cartridge support is rotating is between 500 newtons and 1000 newtons.

7. The filtration system of any of claims 2 - 6 wherein the pressure applied when the filter cartridge support is not rotating is up to 500 newtons.

8. The filtration system of any of claims 2 - 7 wherein the filter cartridge support is rotatable between a plurality of discrete positions and wherein the filter cartridge support is static in each of the plurality of discrete positions for a set period of time.

9. The filtration system of claim 8 wherein the filter cartridge support comprises five discrete positions, and wherein the discrete positions comprise the filtering position and the cartridge replacement position.

10. The filtration system of any preceding claim wherein in use the sealing gas pressure in the sealing cavity between the first and second inner sealing members and/or the sealing cavity between the first and second outer sealing members is higher than the pressure in a central cavity.
